# FASCICULE DE BREVET EUROPEEN

(11) **EP 4 061 654 B1**
(45) Date de publication et mention de la délivrance du brevet: **28.05.2025**
(21) Numéro de dépôt: 20807845.1
(22) Date de dépôt: 29.10.2020
(51) Int. Cl.: B60J 1/17, E05F 11/38, B60J 5/04, B60J 10/30, B60J 10/76

(54) **GUIDE DE COULISSE DE VITRE A FIXATION SIMPLIFIEE**
FENSTERGLEITFÜHRUNG MIT VEREINFACHTER BEFESTIGUNG
WINDOW SLIDE GUIDE HAVING SIMPLIFIED ATTACHMENT

(30) Priorité: 20.11.2019 FR 1912944
(43) Date de publication de la demande: 28.09.2022
(73) Titulaire: Stellantis Auto SAS, 78300 Poissy (FR)
(72) Inventeur: PAPET, Gilles, 78370 PLAISIR (FR); WYKA, Vincent, 90400 DORANS (FR)
(74) Mandataire: BCIP
(86) Numéro de dépôt international: PCT/FR2020/051961
(87) Numéro de publication internationale: WO 2021/099708

(56) Documents cités:
- EP-A1- 1 975 360
- DE-B4- 102009 052 761
- FR-A1- 3 008 034
- JP-A- 2005 096 668
- KR-B1- 100 452 591
- US-A1- 2015 015 023

## Description

La présente invention revendique la priorité de la demande française 1912944 déposée le 20 Novembre 2019 dont le contenu (texte, dessins et revendications) est ici incorporé par référence.

L'invention concerne un guide de coulisse de vitre coulissante de véhicule comportant un moyen de fixation à un élément de structure du véhicule, ainsi qu'une porte de véhicule et d'un véhicule équipé d'un tel guide de coulisse.

Afin de guider une vitre coulissante, en particulier à l'intérieur d'une porte latérale de véhicule, il est connu d'installer un guide de coulisse à l'intérieur de la porte, fixé à la structure de ladite porte. Le guide de coulisse est sous la forme d'un corps allongé comportant une rainure dans laquelle coulisse un bord de la vitre coulissante. Le brevet FR3008034 décrit une porte de véhicule comportant un caisson formé par une doublure intérieure et un panneau extérieur fixé à ladite doublure, et comportant un guide de coulisse à l'intérieur du caisson et fixé à l'une de ses deux extrémités à un renfort de serrure fixé lui-même à la doublure. Cette extrémité du guide de coulisse comporte une patte avec un premier trou faisant face à un deuxième trou réalisé dans une partie du renfort de serrure, la fixation du guide de coulisse sur le renfort de serrure étant réalisée en insérant un clip traversant les deux trous de manière à plaquer et maintenir la patte contre la partie du renfort de serrure comportant le deuxième trou. La patte comporte en outre un pion rentrant dans un troisième trou sur le renfort de serrure à côté du deuxième trou, permettant un positionnement du guide de coulisse par rapport au renfort de serrure et renforçant la résistance aux cisaillements de la fixation, en particulier lors du claquage la porte. L'autre extrémité du guide de coulisse est fixé à la doublure par une vis et un écrou, disposé à l'extrémité d'un bras s'étendant depuis le guide de coulisse jusqu'à la zone de fixation sur la doublure. Le document EP 1 975 360 A1 divulgue une porte comparable dotée d'un guide de coulisse selon le préambule de la revendication 1.

L'inconvénient de cet agencement est que le guide de coulisse est difficile à installer par un opérateur à cause de la difficulté d'accéder et du manque de visibilité à l'intérieur du caisson. En effet, l'accès à l'intérieur du caisson ne peut se faire généralement qu'au travers d'une ouverture d'accès de taille limitée dans la doublure. En particulier, l'opérateur doit réussir à positionner le pion dans le troisième trou en évitant qu'il ne rentre dans le deuxième trou, puis réussir à insérer le clip de fixation au travers du premier et deuxième trou en passant la main dans cette ouverture d'accès de la doublure. Un autre inconvénient est que la résistance mécanique du clip est telle que sous l'effet des sollicitations répétées lors du claquage de la porte, ledit clip finit par se déformer, ce qui génère un jeu entre l'extrémité du guide de coulisse et la pièce sur lequel il est fixé, produisant des bruits parasites à la fermeture de la porte. Un autre inconvénient est que l'opérateur qui réalise le montage du guide de coulisse dans la porte a l'obligation d'assurer le placage dudit guide, contre la pièce sur laquelle il est fixée, en même temps qu'il enfonce le clip afin d'assurer l'absence de jeu entre les pièces et l'absence de bruits parasites. Cette double opération de plaquer la pièce et enfoncer le clip est difficile à réaliser en raison du manque d'accès déjà évoqué. Il en résulte un nombre important de défauts sur les portes fabriquées.

L'objectif de l'invention est de remédier à ces inconvénients. En particulier, un des objectifs est de faciliter la fixation du guide de coulisse dans le caisson de la porte. Un autre collectif est de renforcer la résistance de la fixation du guide de coulisse aux claquages répétés de la porte.

Ce but est atteint selon l'invention, grâce à un guide de coulisse de vitre selon la revendication 1.

Ainsi avantageusement, le guide de coulisse est fixé facilement à un élément de structure du véhicule par un simple coulissement dans lequel l'interface de fixation vient prendre en pince un élément de structure du véhicule. En insérant la griffe de ce type d'interface de fixation dans une ouverture réalisée dans un élément de structure du véhicule, de sorte à prendre en pince une partie dudit élément de structure disposée autour de cette ouverture, l'interface de fixation peut être avantageusement bloquée par les bords de ladite ouverture, le seul mouvement alors possible étant celui correspondant à la une sortie de la griffe de l'ouverture suivant un mouvement opposé à celui ayant permis son insertion. Ce maintien réalisé par la griffe ne nécessite de plus aucune pièce rapportée, tel qu'un clip ou une vis. Ainsi, un opérateur assemblera de manière plus aisée et rapide le guide de coulisse sur l'élément de structure, sans rapporter de pièces permettant cet assemblage, telles que des vis ou des clips.

Selon l'invention, la surface d'appui est une surface sensiblement plane, la partie de maintien est une paroi sensiblement plane et parallèle à la surface d'appui, et la partie de liaison relie un bord de la paroi de la partie de maintien à la surface d'appui.

Ainsi avantageusement, la partie de maintien et la surface d'appui sont particulièrement adaptées pour prendre en pince un élément de structure du véhicule de forme plan, tel qu'un élément en tôle plat. En choisissant un écartement entre la paroi de maintien et la surface d'appui sensiblement équivalent ou légèrement inférieur à l'épaisseur de l'élément de structure, l'insertion de l'élément de structure entre la partie de maintien et la surface d'appui assure un maintien efficace, sans jeu dans la direction perpendiculaire à la surface d'appui.

Selon un autre mode de réalisation de l'invention, la partie de maintien comporte une paroi de guidage formant un angle obtus avec la paroi de maintien en direction opposée à la surface d'appui.

Ainsi avantageusement, la paroi de guidage forme une surface contre laquelle peut venir buter le bord de l'élément de structure sur lequel l'interface de fixation doit être fixée, et guider efficacement l'insertion de l'élément de structure entre la surface d'appui et la paroi de maintien grâce à son angle, facilitant l'insertion de cet élément de structure contre la paroi de maintien et la surface d'appui. De préférence, l'angle est supérieur à 120°.

Selon un autre mode de réalisation de l'invention, la largeur de la griffe diminue depuis la jonction de la partie de liaison avec la surface d'appui jusqu'au bord de la paroi de guidage opposée à la partie de maintien.

La largeur est prise dans la direction donnée par la jonction entre la partie de maintien et la partie de liaison. Cette forme de la partie de liaison permet avantageusement de faciliter l'insertion de la partie de maintien dans une ouverture disposée dans l'élément de structure. En effet, si l'ouverture est de dimension plus grande que la partie de maintien, et de largeur sensiblement identique à celle de la jonction de la partie de liaison avec la surface de l'appui, ladite partie de maintien s'insère facilement dans ladite ouverture par insertion de l'extrémité de la paroi de guidage opposée à la paroi de maintien 22, tandis qu'au fur et à mesure de l'insertion de la partie de liaison, l'augmentation de la largeur de la partie de maintien et de la partie de liaison vers la surface d'appui permet de positionner et de bloquer dans le sens cette largeur l'interface de fixation par rapport à l'élément de structure.

Selon l'invention, le guide de coulisse comporte un moyen de guidage s'étendant en sailli depuis la partie de maintien en direction opposée à la surface d'appui de sorte à guider l'insertion de la griffe dans une ouverture d'un élément de structure sur lequel l'interface de fixation est destinée à être fixer.

Ainsi avantageusement, l'engagement de la partie de maintien dans une ouverture disposée sur un élément de structure est facilité, en particulier lorsque la zone de fixation sur cet élément de structure est difficile d'accès et/ou avec peu de visibilité. En effet, le moyen de guidage peut facilement être placé dans l'ouverture, car l'opérateur peut ressentir au toucher le moment où le moyen de guidage commence à rentrer dans l'ouverture. Une fois le moyen de guidage dans l'ouverture, il suffit de poursuivre son insertion jusqu'à ce que la partie de maintien passe au travers de l'ouverture et la mise en appui de la surface d'appui contre la surface de la partie de l'élément de structure située autour de l'ouverture.

Selon un autre mode de réalisation de l'invention, la partie de maintien comporte une nervure de maintien droite s'étendant en sailli et perpendiculairement à ladite partie de maintien depuis une face de ladite partie de maintien orientée du côté de la surface d'appui.

Ainsi avantageusement, en créant une fente dans l'élément de structure pris en pince dans l'interface de fixation de sorte à ce que la nervure s'insère la fente, le positionnement du guide de coulisse est amélioré. Un autre avantage est que cette nervure de maintien permet de créer des surfaces de contact complémentaire avec l'élément de structure sur lequel est fixée l'interface de fixation, et donc de renforcer la résistance de cette fixation vis-à-vis des efforts orientés parallèlement au plan de la surface d'appui et perpendiculairement à ladite nervure, comme par exemple les efforts issus du claquage de la porte.

L'invention porte aussi sur une porte de véhicule comportant un guide de coulisse tel que décrit précédemment, comprenant un élément de structure en tôle prise en pince par l'interface de fixation, la surface d'appui étant disposée d'un côté de l'élément de structure et la partie de maintien étant positionnée de l'autre côté de l'élément de structure pris en pince.

De préférence, l'élément de structure en tôle comporte une ouverture dimensionnée de sorte à ce que la griffe passe dans l'ouverture et prenne en pince une partie de l'élément de structure en bordure de l'ouverture.

Dans une mode de réalisation particulier de la porte, le guide de coulisse comporte la nervure de maintien et l'élément de structure comporte une fente agencée de sorte à recevoir la nervure de maintien.

Dans un autre mode de réalisation de la porte de véhicule, l'élément de structure est une patte de fixation issue d'un renfort de serrure de porte et fixé à une doublure de ladite porte.

Ainsi, l'assemblage du guide de coulisse sur la porte est facile et rapide, et ne nécessite pas de manipuler beaucoup de petites pièces pour sa fixation dans une zone peu accessible, l'intérieur de la porte, et avec peu de visibilité.

L'invention porte aussi sur un véhicule comportant un guide coulisse tel que décrit précédemment une porte telle que décrite précédemment.

L'invention sera mieux comprise à la lecture de la description qui va suivre, donnée uniquement à titre d'exemple et faite en se référant aux dessins annexés, sur lesquels :
[Fig.1] représente une doublure de porte d'un véhicule comportant un guide de coulisse suivant l'invention.
[Fig.2] représente une vue en perspective de l'interface de fixation du guide de coulisse.
[Fig.3] représente une patte de fixation recevant l'interface de fixation.
[Fig.4] représente une vue d'une variante de l'interface de fixation du guide de coulisse fixée sur un élément de structure.
[Fig. 5] représente la patte de fixation recevant l'interface de fixation dans sa variante de la Fig. 4.
[Fig.6] représente une variante du guide de coulisse dans laquelle l'interface de fixation est située entre ses extrémités.

Les dessins sont des représentations schématiques pour faciliter la compréhension de l'invention. Les composants ne sont pas forcément représentés à l'échelle. Les mêmes références correspondent aux mêmes composants d'une figure à l'autre.

Les directions verticale ou horizontale sont prises dans le référentiel du véhicule.

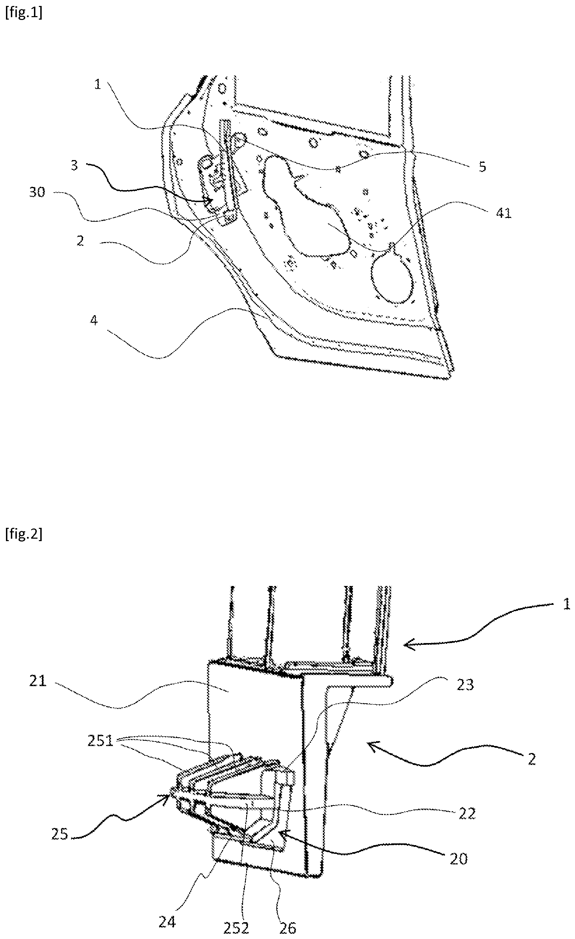

La figure 1 montre une doublure 4 de porte de véhicule sur laquelle est fixée un guide de coulisse 1. La doublure de porte 4 est un élément de structure de la porte généralement en tôle métallique emboutie sur lequel est fixé un panneau extérieur (non représenté dans la figure 1). Le guide de coulisse 1 permet de guider une vitre coulissante dans une direction générale verticale entre une position fermée dans laquelle elle ferme une partie fenêtre et une position ouverte dans laquelle la vitre est située dans le volume formé entre la doublure 4 et le panneau extérieur, volume généralement appelé caisson de porte, situé sous la partie fenêtre. Le coulissement de la vitre suit généralement un parcours en courbe selon la courbure de la vitre. Pour permettre ce guidage, le guide coulisse 1 comporte une rainure dans laquelle l'un des bords de la vitre coulisse.

Dans le mode de réalisation de la figure 1, le guide de coulisse 1 est fixé à l'une de ses extrémités à la doublure de porte 4 par un élément de fixation 5, et à son autre extrémité à un renfort de serrure 3 par une interface de fixation 2. Le renfort de serrure 3 est une pièce en tôle sur laquelle se fixe la serrure. L'épaisseur de la tôle de ce renfort 3 est généralement supérieure à l'épaisseur de la tôle formant la doublure de porte 4 afin de supporter les efforts de fermeture de la serrure et de protéger ladite serrure en cas de choc latéral contre le véhicule. Le renfort de serrure 3 comporte une patte de fixation 30 sur laquelle se fixe l'interface de fixation 2.

Comme illustré en figure 2, l'interface de fixation 2 comporte une surface d'appui 21, sensiblement plane, de laquelle s'étend en saillie une griffe 20. La griffe 20 comporte une partie de maintien 22 distante de la surface d'appui 21 de manière à laisser un espace entre cette partie de maintien 22 et ladite surface d'appui 21, espace dans lequel rentre une partie de la patte de fixation 30. La partie de maintien 22 est reliée à la surface d'appui 21 par une partie de liaison 23. L'insertion d'une partie de la patte de fixation 30, par exemple jusqu'à être en butée contre la partie de liaison 23, dans l'espace entre la partie de maintien 22 et la surface d'appui 21, permet un maintien de l'interface de fixation 2 par rapport à la patte de fixation 30. L'écartement entre la surface d'appui 21 et la partie de maintien 22 est par exemple sensiblement égale à l'épaisseur de la patte de fixation 30 afin que la surface d'appui 21 et la partie de maintien 22 soient tous les deux en contact avec la patte de fixation 30. En variante, cet écartement est légèrement inférieur de manière à permettre l'insertion de la partie de la patte de fixation 30 tout en générant un pincement sur cette patte de fixation 30.

Dans les modes de réalisation illustrés dans les figures, la partie de maintien 22 est une paroi sensiblement plane et parallèle à la surface d'appui 21, formant une paroi de maintien. La partie de liaison 23 relie un bord de la paroi de maintien 22 à la surface d'appui 21. Dans la représentation de la figure 2, la partie de liaison 23 est une paroi plate perpendiculaire à la surface d'appui 21 et à la paroi de maintien 22, formant une paroi de liaison. D'autres orientations et formes peuvent être envisagées.

Une paroi de guidage 24 s'étend depuis un bord de la paroi de maintien 22 opposé au bord de ladite paroi de maintien 22 relié à la paroi de liaison 23. Cette paroi de guidage 24 forment un angle obtus avec la paroi de maintien 22 en direction opposée à la surface d'appui 21 de manière à s'éloigner de cette surface d'appui 21 depuis sa jonction avec la paroi de maintien 22. C'est-à-dire que la paroi de guidage 24 est en biais par rapport à la paroi de maintien 22, la partie de la paroi de guidage 24 la plus proche de la surface d'appui 21 étant à la jonction avec la paroi de maintien 22 et la partie la plus éloignée étant à l'extrémité de la paroi de guidage 24 opposée à ladite jonction avec la paroi de maintien 22. Cette paroi de guidage 24 permet d'aider à l'insertion d'une partie de la patte de fixation 30 entre la paroi de maintien 22 et à la surface d'appui 21. Afin d'obtenir une insertion plus aisée, la paroi de guidage 24 est sensiblement plane et forme un angle obtus avec la paroi de maintien 22. Cet angle est choisi par exemple supérieur à 120 degrés et inférieur à 180 degrés pour assurer un guidage performant. La paroi de guidage 24 peut avoir d'autres formes ou formée d'autres angles avec la paroi de maintien 22.

Dans le mode de réalisation de l'interface de fixation 2 illustré dans la figure 2, la surface d'appui 21 comporte une ouverture de moulage 26 en vis-à-vis de la paroi de maintien 22. Cette ouverture de moulage 26 permet de créer la paroi de maintien 22 et d'avoir un démoulage perpendiculaire à la surface d'appui 21 sans nécessiter de moule comportant des tiroirs, une partie du moule traversant cette ouverture 26 pour former la paroi de maintien 22.

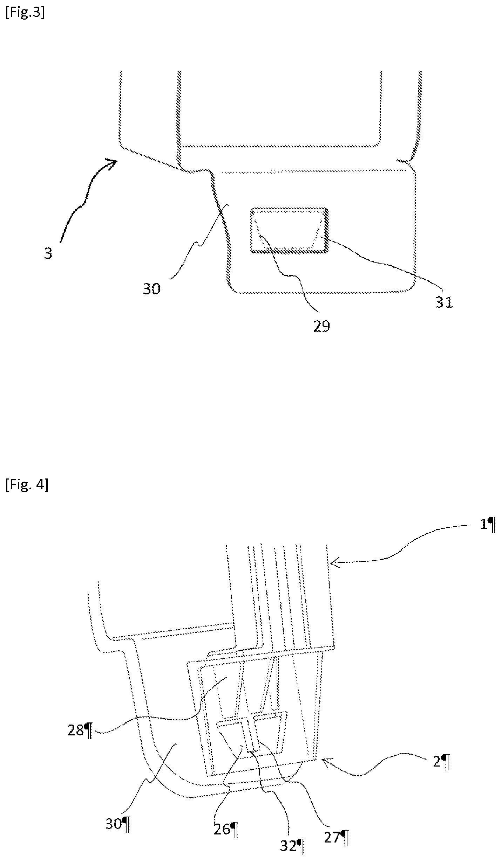

La figure 3 montre la forme de la partie de la patte de fixation 30 recevant l'interface de fixation 2. La patte de fixation 30 comporte une ouverture 31, rectangulaire, dont la forme permet le passage de la griffe 20 : la paroi de maintien 22 avec la paroi de liaison 23 et la paroi de guidage 24 peuvent passer au travers de cette ouverture 31 de manière à ce qu'une partie de la patte de fixation 30 située sur l'un des bords de l'ouverture 31 s'insère entre la paroi de maintien 22 et la surface d'appui 21, jusqu'à venir au contact de la paroi de liaison 23. La forme en trapèze 29 dessinée en trait discontinu représente la forme générale de la paroi de maintien 22 avec la paroi de guidage 24. Cette forme en trapèze 29 est superposée sur l'ouverture 31 qui est de forme rectangulaire. L'extrémité la moins large de cette forme de trapèze 27 correspond à la petite base du trapèze, et l'extrémité la plus large la grande base. Cette forme générale en trapèze 29 de l'ensemble formé par la paroi de guidage 24 et la paroi de maintien 22 permet une insertion aisée dans l'ouverture 31 de la griffe 20 par son extrémité la moins large, extrémité correspondant à l'extrémité de la paroi de guidage 24, et de positionner et maintenir la griffe 20 dans l'ouverture 31 au fur et à mesure qu'elle passe au travers de ladite ouverture 31 grâce à l'augmentation de sa largeur en direction de la paroi de liaison 23, l'extrémité la plus large de cette forme en trapèze 29 étant au niveau de la paroi de liaison 23. Lorsque la griffe 20 est passée au travers de l'ouverture 31, l'interface de fixation 2 est poussée jusqu'à ce que la patte de fixation 30 soit prise en pince d'un côté par la surface d'appui 21 et de l'autre côté par la paroi de maintien 22 de la griffe 20. La partie de la patte de fixation 30 prise en pince est une partie de la patte 30 en bordure de l'ouverture 31.

D'autres formes de l'ensemble formé par la paroi de maintien 22 et de la paroi de guidage 24 peuvent être utilisées, ces formes ayant la particularité d'offrir une largeur qui diminue depuis la paroi de liaison 23 jusqu'à l'extrémité de la paroi de guidage 24 opposée à la paroi de maintien 22.

De même, la paroi de liaison 23 a une forme générale de trapèze, c'est-à-dire que sa largeur au niveau de sa jonction avec la surface d'appui 21 est plus large que sa largeur au niveau de sa jonction avec la paroi de maintien 22, la largeur étant dans la direction définie par la jonction. La largeur la plus grande de cette paroi de liaison 23 est sensiblement identique à la largeur de l'ouverture 31 une fois que l'interface de fixation 2 prend en pince la partie de la patte de fixation 30 avec le bord de l'ouverture 31 en butée contre la paroi de maintien 23. Cette forme de la paroi de maintien 23 et ce dimensionnement de l'ouverture 31 permet un calage efficace de la griffe 20 contre les bords de l'ouverture 31. L'ouverture 31 peut être de forme non rectangulaire, comme par exemple trapézoïdale, avec des dimensions permettant l'insertion et le positionnement précis de la griffe.

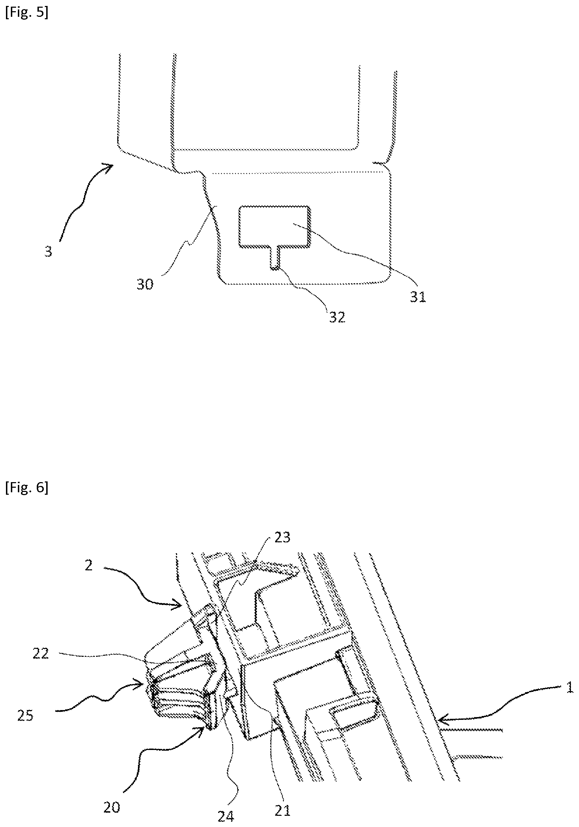

Un moyen de guidage 25 s'étend en sailli depuis la paroi de maintien 22 en direction opposée de la surface d'appui 21. Dans les modes de réalisations selon l'invention illustrés en figure 2 et 6, le moyen de guidage 25 est réalisé par un ensemble de nervures de forme trapézoïdale qui s'étendent perpendiculairement à la paroi de maintien 22, la partie la plus large de ces nervures trapézoïdales étant au niveau leur liaison avec la paroi de maintien 22 et la partie la plus étroite à l'opposé. Dans la figure 2, le moyen de guidage 25 est formé par trois nervures de guidage 251 parallèles, en vis-à-vis, et une quatrième nervure de guidage 252 perpendiculaire aux trois autres nervures de guidage 251 et traversant ces trois premières nervures de guidage 251. Ces quatre nervures 251, 252 donnent au moyen de guidage 25 une forme générale conique. Ce moyen de guidage 25 permet à un opérateur qui monte le guide de coulisse 1 dans une porte sans visibilité, de détecter l'ouverture 31 en faisant glisser le moyen de guidage contre l'élément de structure sur lequel l'interface de fixation 2 doit être fixé, par exemple sur la patte de fixation 30 dans les modes de réalisation présentés dans les figures, jusqu'à ce qu'il ressente à la main que ledit moyen de guidage 25 rencontre l'ouverture 31. Lorsque le moyen de guidage 25 passe au niveau de l'ouverture 31, l'opérateur ressent en effet avec sa main la présence de ladite ouverture 31, le moyen de guidage 25 cherchant alors à rentrer dans l'ouverture 31. L'extrémité du moyen de guidage 25 opposée à la paroi de maintien étant de plus petite dimension que la paroi de maintien 22 elle-même et que l'ouverture 31, il suffit alors à l'opérateur d'enfoncer cette partie de guidage 25 dans l'ouverture 31 pour faire traverser facilement ledit moyen de guidage 25 puis la griffe 20 au travers de ladite ouverture 31. Comme illustré dans les figures 3 et 6, si la griffe 20 comporte une paroi de guidage 24, le moyen de guidage 25 s'étend aussi sur cette paroi de guidage, sur sa face opposée à la surface d'appui 21.

Comme illustré en figure 1, la doublure 4 comporte une ouverture d'accès 41 de taille réduite permettant à un opérateur d'insérer des équipements dans le caisson, et notamment le guide de coulisse 2. La dimension réduite de cette ouverture d'accès 41 rend difficile l'accès à l'intérieur du caisson et ne permet pas à un opérateur d'avoir une bonne visibilité de l'intérieur du caisson une fois qu'il a introduit son bras à l'intérieur dudit caisson pour installer le guide de coulisse 2.

Dans le mode de réalisation présenté en figure 4, l'interface de fixation 2 comporte une nervure droite de maintien 27 s'étendant depuis la paroi de maintien 22, perpendiculairement à ladite paroi de maintien 22, du côté de la surface d'appui 21. Elle peut s'étendre jusqu'à la paroi de liaison 23 comme représenté dans la figure 4, ou s'arrêter avant la paroi de liaison 23. La nervure de maintien 27 s'étend dans la même direction que celle dans laquelle est déplacée la griffe 20 dans l'ouverture 31 pour prendre en pince une partie de la patte de fixation 30. De manière complémentaire, l'ouverture 31 comporte sur un de ses bords une fente 32 disposée de sorte que lorsque l'interface de fixation 2 prend en pince la patte de fixation 30, la nervure de maintien 27 s'insère dans cette fente 32. Cette fente 32 et cette nervure de maintien 27 sont donc dans une même direction d'assemblage de l'interface de fixation 2 avec la patte de fixation 30. Cette fente 32 et cette nervure de maintien 27 permettent d'améliorer la résistance de la fixation entre l'interface de fixation 2 et la patte de fixation 30, notamment vis-à-vis des efforts perpendiculaires à cette direction d'assemblage et dans un plan parallèle à la surface d'appui 21.

Pour une installation du guide de coulisse 1 dans une porte de véhicule, la direction d'assemblage sera sensiblement dans un plan vertical et longitudinale au véhicule lorsque la porte est fermée. Cette direction d'assemblage est sensiblement dans la direction d'extension du guide de coulisse 1. La nervure de maintien 27 associée à la fente 32 étant aussi sensiblement dans cette même direction d'assemblage, elle permet d'assurer un maintien fiable de l'interface de fixation 2 sur la patte de fixation 30 lors des claquages de la porte, ces claquages générant des efforts importants perpendiculairement à la direction de cette nervure de maintien 27, notamment lorsque la vitre est en position ouverte où l'interface de fixation 2 doit résister aux efforts issues de l'inertie de la vitre située dans ce cas à proximité de l'interface de fixation 2.

Dans les figures 1, 2 et 4, l'interface de fixation 2 est située à l'extrémité du guide de coulisse 1. En variante, interface de fixation 2 peut être disposée entre les deux extrémités du guide de coulisse 1 comme illustré en figure 6.

En figure 1, l'interface de fixation 2 est fixée sur la patte de fixation 30 réalisée par le renfort de serrure 3 fixée à la doublure de porte 4. En variante non représentée, la patte de fixation 30 peut être une patte spécifique fixée à la doublure de porte 4 ou issue de ladite doublure de porte, ou d'un autre équipement de la porte. En autre variante non représentée, l'interface de fixation 2 peut être fixée directement sur la doublure de porte 4, en insérant la griffe 20 dans une ouverture appropriée. En autre variante non représentée, le guide de coulisse 1 peut être dans une autre partie du véhicule qu'une porte, fixé à un élément de structure du véhicule, comme par exemple un élément de structure du côté latéral du véhicule, par exemple dans le cas où le guide de coulisse 1 guide une vitre de custode arrière coulissante.

En figures 2 et 4, la surface d'appui 21 comporte une ouverture de moulage 26 en vis-à-vis de la paroi de maintien 22 et de la paroi de guidage 24. En variante, à la surface d'appui 21 ne comporte pas ce type d'ouverture de moulage 26 et s'étend totalement en vis-à-vis de la paroi de maintien 22 et de la paroi de guidage 24 comme représenté en figures 6.

Dans une autre variante non représentée, l'ouverture 31 est disposée sur le bord d'un élément de structure, de sorte à former une encoche le long de ce bord dans lequel s'insère l'interface de fixation 2 de manière à prendre en pince la partie de l'élément de structure située au fond de l'encoche.

## Revendications

1. Guide de coulisse (1) de vitre pour une vitre coulissante de véhicule comportant une interface de fixation (2) à un élément de structure (30) du véhicule, ladite interface de fixation (2) comportant une surface d'appui (21) et une griffe (20) en saillie par rapport à la surface d'appui (21), ladite griffe étant formée par une partie de liaison (23) et une partie de maintien (22), la partie de maintien (22) étant distante de la surface d'appui (21) et la partie de liaison (23) reliant la partie maintien (22) à la surface d'appui (21), de sorte à prendre en pince une partie de l'élément de structure (30) entre la partie de maintien (22) et la surface d'appui (21), la surface d'appui (21) étant une surface sensiblement plane, la partie de maintien (22) est une paroi sensiblement plane et parallèle à la surface d'appui (21), et la partie de liaison (23) relie un bord de la paroi de la partie de maintien (22) à la surface d'appui (21), le guide de coulisse (1) comportant un moyen de guidage (25) s'étendant en sailli depuis la partie de maintien (22) en direction opposée à la surface d'appui (21) de sorte à guider l'insertion de la griffe (20) dans une ouverture (31) d'un élément de structure (30) sur lequel l'interface de fixation (2) est destinée à être fixer, **caractérisé en ce que** le moyen de guidage (25) est réalisé par un ensemble de nervures de forme trapézoïdale qui s'étendent perpendiculairement à la paroi de la partie de maintien (22) à la surface d'appui (21), la partie la plus large de ces nervures trapézoïdales étant au niveau de leur liaison avec ladite paroi de la partie de maintien (22) à la surface d'appui (21) et la partie la plus étroite à l'opposé.

2. Guide de coulisse (1) suivant la revendication précédente, dont la partie de maintien (22) comporte une paroi de guidage (24) formant un angle obtus avec la paroi de maintien (22) en direction opposée à la surface d'appui (21).

3. Guide de coulisse (1) suivant la revendication 2, dont la largeur de la griffe (20) diminue depuis la jonction de la partie de liaison (23) avec la surface d'appui (21) jusqu'au bord de la paroi de guidage (24) opposée à la partie de maintien (22).

4. Guide de coulisse (1) suivant l'une des revendications précédentes, dont la partie de maintien (22) comporte une nervure de maintien (27) droite s'étendant en sailli et perpendiculairement à ladite partie de maintien (22) depuis une face de ladite partie de maintien (22) orientée du côté de la surface d'appui (21).

5. Porte de véhicule comportant un guide de coulisse (21) suivant l'une des revendications précédentes, **caractérisé en ce qu'**elle comprend un élément de structure (30) en tôle prise en pince par l'interface de fixation (2), la surface d'appui (21) étant disposée d'un côté de l'élément de structure (30) et la partie de maintien (22) étant positionnée de l'autre côté de l'élément de structure (30) pris en pince.

6. Porte de véhicule suivant la revendication 5, avec un guide de coulisse (1) suivant la revendication 4, dont l'élément de structure (30) comporte une fente (32) agencée de sorte à recevoir la nervure de maintien (27).

7. Porte de véhicule suivant l'une des revendications 5 ou 6, **caractérisé en ce que** l'élément de structure (30) est une patte de fixation issue d'un renfort de serrure (3) de porte et fixé à une doublure (4) de ladite porte.

8. Véhicule comportant un guide coulisse (21) suivant l'une des revendications de 1 à 4 ou une porte suivant l'une des revendications de 5 à 7.

## Patentansprüche

1. Glasschieberführung (1) für eine Fahrzeugschieberscheibe, die eine Befestigungsschnittstelle (2) an einem Strukturelement (30) des Fahrzeugs aufweist, wobei die Befestigungsschnittstelle (2) eine Auflagefläche (21) und eine von der Auflagefläche (21) abstehende Klaue (20) aufweist, wobei die Klaue durch einen Verbindungsabschnitt (23) und einen Halteabschnitt (22) gebildet ist, wobei der Halteabschnitt (22) von der Auflagefläche (21) beabstandet ist und der Verbindungsabschnitt (23) verbindet Der Halteteil (22) ist an der Auflagefläche (21) derart angeordnet, dass er einen Teil des Strukturelements (30) zwischen dem Halteteil (22) und der Auflagefläche (21) einklemmt, wobei die Auflagefläche (21) eine im Wesentlichen ebene Fläche ist, der Halteteil (22) eine im Wesentlichen ebene und zur Auflagefläche (21) parallele Wand ist und der Verbindungsteil (23) einen Rand der Wand des Halteteils (22) mit der Auflagefläche (21) verbindet, wobei die Führung Kulisse (1) mit einem Führungsmittel (25), das sich von dem Halteteil (22) in einer der Auflagefläche (21) entgegengesetzten Richtung erstreckt, um das Einführen der Klaue (20) in eine Öffnung (31) eines Strukturelements (30), an dem die Befestigungsschnittstelle (2) zu befestigen ist, zu führen, **dadurch gekennzeichnet, dass** das Führungsmittel (25) durch eine Anordnung von trapezförmigen Rippen gebildet ist, die sich senkrecht zur Wand des Halteteils (22) an der Auflagefläche (21), wobei der breiteste Teil dieser trapezförmigen Rippen an ihrer Verbindung mit der Wand des Halteteils (22) mit der Auflagefläche (21) und dem gegenüberliegenden schmalsten Teil liegt.

2. Kulissenführung (1) nach dem vorhergehenden Anspruch, bei der der Halteabschnitt (22) eine Führungswand (24) aufweist, die mit der Haltewand (22) in einem stumpfen Winkel gegenüber der Auflagefläche (21) verläuft.

3. Kulissenführung (1) nach Anspruch 2, bei der die Breite der Klaue (20) von der Verbindung des Verbindungsteils (23) mit der Auflagefläche (21) bis zu dem dem Halteteil (22) gegenüberliegenden Rand der Führungswand (24) abnimmt.

4. Kulissenführung (1) nach einem der vorhergehenden Ansprüche, bei der der Halteabschnitt (22) eine gerade Haltestege (27) aufweist, die sich von einer Seite des Halteabschnitts (22), die der Auflagefläche (21) zugewandt ist, vorsteht und senkrecht zu dem Halteabschnitt (22) verläuft.

5. Fahrzeugtür mit einer Kulissenführung (21) nach einem der vorhergehenden Ansprüche, **dadurch gekennzeichnet, dass** sie ein von der Befestigungsschnittstelle (2) eingreifendes Blechkonstruktionselement (30) umfasst, wobei die Auflagefläche (21) auf einer Seite des Konstruktionselements (30) angeordnet ist und der Halteteil (22) auf der anderen Seite des eingreifendes Konstruktionselements (30) angeordnet ist.

6. Fahrzeugtür nach Anspruch 5 mit einer Kulissenführung (1) nach Anspruch 4, deren Strukturelement (30) einen Schlitz (32) aufweist, der zur Aufnahme der Haltestege (27) angeordnet ist.

7. Fahrzeugtür nach einem der Ansprüche 5 oder 6, **dadurch gekennzeichnet, dass** das Strukturelement (30) eine Befestigungslasche ist, die aus einer Türschlossverstärkung (3) stammt und an einer Auskleidung (4) der Tür befestigt ist.

8. Fahrzeug mit einer Führung (21) nach einem der Ansprüche 1 bis 4 oder einer Tür nach einem der Ansprüche 5 bis 7.

## Claims

1. Window slide guide (1) for a vehicle sliding window comprising a fastening interface (2) to a structural item (30) of the vehicle, said fastening interface (2) comprising a bearing surface (21) and a claw (20) projecting by report from the bearing surface (21), said claw being formed by a connecting part (23) and a holding part (22), the holding part (22) being distant from the bearing surface (21) and the connecting part (23) connecting the holding part (22) to the bearing surface (21), so as to clamp a part of the structural item (30) between the holding part (22) and the bearing surface (21), the bearing surface (21) being a substantially planar surface, the holding part (22) is a substantially planar wall and parallel to the bearing surface (21), and the connecting part (23) connects an edge of the wall of the holding part (22) to the bearing surface (21), the guide, slide (1) comprising guide means (25) projecting from the holding part (22) in management opposite the bearing surface (21) so as to guide the insertion of the claw (20) into an opening (31) of a structural item (30) on which the fixing interface (2) is intended to be fixed, wherein the guide means (25) is realised by a set of trapezoidal-shaped ribs which extend perpendicularly to the wall of the holding part (22) the bearing surface (21), the widest part of these trapezoidal ribs being at the level of their connection with the said wall of the holding part (22) on the bearing surface (21) and the narrowest part on the opposite side.

2. Slide guide (1) according to the previous claim, the holding part (22) of which comprises a guide wall (24) forming an obtuse angle with the holding wall (22) in management opposite the bearing surface (21).

3. Slide guide (1) according to Claim 2, the width of the claw (20) of which decreases from the junction of the connecting part (23) with the bearing surface (21) to the edge of the guide wall (24) opposite the holding part (22).

4. Slide guide (1) according to one of the previous claims, the holding part (22) of which comprises a straight holding rib (27) extending protruding perpendicularly to the said holding part (22) from a face of the said holding part (22) orientated on the side of the bearing surface (21).

5. Gate for a vehicle comprising a slide guide (21) according to one of the previous claims, **characterised in that** it comprises a structural item (30) made of sheet metal gripped by the fixing interface (2), the bearing surface (21) being arranged on one side of the structural item (30) and the holding part (22) being positioned on the other side of the structural item (30) gripped.

6. Gate according to claim 5, with a slide guide (1) according to claim 4, the structural item (30) of which comprises a slit (32) arranged so as to leave the holding rib (27).

7. Vehicle Gate according to either of Claims 5 and 6, **characterised in that** the structural item (30) is a fixing lug coming from a gate lock reinforcement (3) and fixed to a lining (4) of the said gate.

8. Vehicle comprising a sliding guide (21) according to one of Claims 1 to 4 or a gate according to one of Claims 5 to 7.
